Europäisches Patentamt

European Patent Office

Office européen des brevets

(19)

(11) **EP 0 749 011 A2**

(12) **EUROPEAN PATENT APPLICATION**

(43) Date of publication:
18.12.1996 Bulletin 1996/51

(51) Int. Cl.$^6$: **G01N 21/17**

(21) Application number: 96108232.8

(22) Date of filing: 23.05.1996

(84) Designated Contracting States:
AT BE DE DK ES GB IE NL PT

(30) Priority: 12.06.1995 IT MI951245

(71) Applicant: ENEL S.p.A.
I-00198 Roma (IT)

(72) Inventors:
• Zanzottera, Eugenio
120, Via A. Pisano, 56122 Pisa (IT)
• Del Corno, Ada
120, Via A. Pisano, 56122 Pisa (IT)
• Carrer, Isabella
120, Via A. Pisano, 56122 Pisa (IT)
• Fiorina, Lorenzo
120, Via A. Pisano, 56122 Pisa (IT)
• Pintus, Nice
120, Via A. Pisano, 56122 Pisa (IT)

(74) Representative: Ferraiolo, Rossana et al
Ferraiolo S.r.l.,
Via Napo Torriani, 10
20124 Milano (IT)

(54) **Photo-acoustic method for measuring the concentration of light absorbing substances**

(57)    In a flue (1) wherein light absorbing substances are present a number of $m$ intersection points is produced between a plurality of $n$ pulse laser beams (6) and a plurality of $q$ planes, perpendicular to said laser beams, each passing through the centre of a microphone (7) so as to obtain a plurality of $m$ photo-acustic signals that can be used for the desired measurement.

FIG. 1

EP 0 749 011 A2

## Description

The present invention concerns a photo-acoustic method for measuring the concentration of light absorbing substances, precisely for measuring said concentration punctually and non intrusively in an extended environment, intending extended environment as a part of space not necessarily limited by physical walls or a part of space limited by physical walls, such as the flue for a burner's fumes or of a chemical plant; light absorbing substances are intended as all those solid, liquid or gaseous bodies or in the form of an aerosol that can absorb light at given wave-lengths. The purpose of these measurements is to provide a map of the concentration of said substances for diagnostic purposes or to optimize the functions of a plant; especially the mapping of the concentration of gas in extended environments, in correspondence with a catalysis system, has the purpose of providing useful information for the regulation of said catalysis plant or to provide data concerning its effectiveness or any malfunctions.

According to the known technique, said measurement is performed using various methods, employing commercial systems, based on various principles, that allow to determine the concentration of chemical species, for example ammonia, within a flue by the following methods:

-   punctual measurement by sampling, by means of suction probes positioned in locations of the plant where the measurements of concentration are desired; the probes convey the fumes to be analyzed towards the measurement instrument for on line analysis or towards a trap or container in which the gas sample is stored and preserved for analysis to be conducted at a later time; the analysis instrument may be based on various types of technique, such as colour gauging methods, ion chromatography, or micro-wave absorption; an instrument based on the same photo-acoustic technique used by the invention proposed herein has also been developed, but this technique performs the measurement in cell on gas sampled by means of probes with the drawback that to obtain a mapping of the concentration one must have one or more probes, to be moved or distributed in the desired measurement locations.
-   integral measurement along the entire pathway, for example by means of optical absorption methods; this measurement technique allows to perform a measurement of the average concentration along the optical pathway set between a light transmitter and an optical receiver facing it; usually the transmitter and the receiver are placed in correspondence with two opposite walls of the flue; in this case the mapping could take place by means of tomography techniques, measuring the integrated concentration along different transverse lines of measurement that cross the flue.

The limits of the known technique lie in that no instrument is able to perform the measurement of concentration nearly simultaneously and non intrusively on a grid of many locations in an extended environment and provide the integrated measurement of concentration along one or more cords. Moreover, punctual measurements are of the intrusive type, that is they require the insertion of the sampling probe in the desired location, for example within a flue, in touch with hot and corrosive gases. The sampling line must usually be heated in order to avoid the condensation of the gases (especially $NH_3$ and $H_2O$). Extracting type techniques often require the conditioning of the sample and the calibration of the probes by means of bottles of sample gas.

The physical principles upon which the present invention is based are summarized below.

When a beam of light of a given wave-length acts upon an absorbing body (solid, liquid or gaseous) part of the energy transported by the beam is absorbed by the body and converted, partly or nearly entirely, into heat, that is in the heating of that part of the material crossed by the beam. If the beam is pulsating or modulated in time (intensity or wave-length), also the heating of the body will take place in a manner modulated in time (with characteristic timing that depends both on the type of luminous excitement and on the characteristics of the body). The heating of the body, that is variable in time, in turn produces acoustic waves, the amplitude of which is proportional to the luminous intensity of the beam and to the concentration of absorbing substances. Hence, by measuring the intensity of the incident luminous signal by means of a light detector and the intensity of the acoustic signal by means of an acoustic detector, that shall simply be termed microphone herein, it is possible to obtain the concentration datum by means of coupling constants that bear in mind the characteristics of the means and the geometry of the measurement.

The luminous source may be of the conventional type (e.g. a lamp emitting visible light, or else a black body at high temperatures in infra-red) but is preferably of the laser type. In this second case owing to the spatial consistency properties of a laser source, the luminous beam is propagated keeping substantially on target even for long distances; thanks to these properties, the acoustic wave that is propagated when the beam crosses optically absorbing means is generated in a spatially well confined zone that coincides with the same beam; this makes possible the analysis of peculiar zones of the means.

The photo-acoustic signal generated by short laser pulses is also of the pulse type with durations determined by the characteristics of the body, the section of the laser beam and its duration.

The type of microphone used depends on the type of environment in which it is set; for measurements in gas one generally uses condenser or piezo-ceramic microphones.

The sensitivity of the measurement method is such that even extremely low optical absorption can be measured down to $10^{-7}$ cm$^{-1}$ in favourable conditions, and hence the concentration of substances even well below 1 ppm may be easily measured. On the other hand, direct measurements of optical absorption offer a lower sensitivity allowing the measurement of absorbency no less than $10^{-3}$.

The photo-acoustic method has been applied for many years in research laboratories for the measurement of the absorbency spectrum of various substances, or for the measurement of the concentration of various gas traces in gaseous or liquid fluids. In most of the applications the fluids to be examined is sucked into the measurement cells; in order to allow the passage of the optical radiation within the same cell, its walls are provided with windows of a material transparent to the optical radiation used. The microphone is usually lodged within the same cell, or else coupled to it by means of a wave-guide, that allows to carry the acoustic signal from it to the sensitive area of the microphone without undergoing substantial dampening.

A smaller number of applications, described in literature, do not require the use of cells, for example to study the flame dynamics in a laboratory and in the analysis of radicals, the measurement is performed by focusing the laser beam in the area to be checked and gathering the photo-acoustic-signal at 90° by means of a microphone outside the reaction zone.

The advantage of the above described method consists in good sensitivity and in the fact that measurements in a precise location can be performed and that the measurement is non intrusive and hence does not disturb the process examined.

The present invention is based on the photo-acoustic laser and solves the problem of obtaining a mapping of the chemical species within an extended environment, such as a flue for fumes. The invented method uses the phenomenon of a photo-acoustic signal that propagates at 90° compared to the direction of the propagation of a laser beam that generated it; as a consequence, a microphone set at a given distance from a laser beam gathers a signal coming from a well defined location within the environment examined, that is from the point of intersection of the laser beam with the plane perpendicular to it that passes through the centre of the microphone; the intensity of the signal measured by the microphone is proportional to the concentration of the absorbing body and to the energy of the laser beam at the intersection point; the intensity of the signal measured by the microphone is a function of the diameter, of the duration of the laser beam pulse, of the temperature inside the environment, of the distance between the laser beam and the microphone and finally depends on the composition of the gas in the environment.The energy of a laser pulse can be measured with a convenient detector, while the other parameters may be included in an appropriate coupling factor to be defined by means of calibration operations.

The invented photo-acoustic method to measure the concentration of absorbing substances in an extended environment comprises the production within said environment a number of $\underline{m}$ intersection points between a number of $\underline{n}$ laser pulse beams, at convenient distances, and a number of planes $\underline{q}$, perpendicular to said $\underline{n}$ laser beams, also conveniently distanced, each passing through the centre of a microphone, so as to obtain a number of $\underline{m} = \underline{n} \times \underline{q}$ photo-acoustic signals that can be used for the desired measurement.

The $\underline{n}$ laser beams may be secondary beams obtained by reflecting a primary laser beam issued by an appropriate pulse laser source by means of a series of mirrors.

Preferably the $\underline{n}$ laser beams are parallel to one another and lie upon the same plane and said $\underline{q}$ planes are parallel to one another and perpendicular to the laser beams.

Said extended environment may be a limited space with perimeter walls such as a flue through which a fluid passes in which said $\underline{n}$ laser beams penetrate laterally through openings formed in a first portion of said walls, while said $\underline{q}$ planes passing through the centre of as many microphones pass transversally through a second portion of said walls in which the said microphones are installed.

It is understood that said extended environment may be a flue with a circular, square or rectangular cross section and said $\underline{m}$ intersection points will be on a plane transverse plane of the flue; it is also understood that one may obtain a number of said numbers of $\underline{m}$ intersection points in the flue if one generates more than one transverse plane containing laser beams and further numbers of $\underline{q}$ planes passing through further microphones.

Suitable light detectors are set on the wall opposite the first one, each one struck by a laser beam, in order to measure the energy transmitted through the environment and, hence, provide data on the average concentration of the substance being examined and to allow to calculate the energy of the laser beam in each of said $\underline{m}$ intersection points and, hence, the punctual concentration.

Each microphone is preferably associated to a receiving antenna in order to provide ampler signals.

The laser source is preferably a short pulse one to produce acoustic signals of brief duration and photo-acoustic signals that, originated by laser beams set at different distances from the microphones, reach the latter at different times and are therefore more clearly distinguished allowing to perform contemporary measurements along all laser beams or, obviously, as an alternative, in a sequence along one laser beam after another.

The main advantages of the invention are summarized below: the measurement is non intrusive, that is it does not require the introduction of instruments within the environment examined because it is performed remotely, it offers satisfactory spatial resolution and can provide data on the concentration of gaseous substances in at least an internal net of an extended environment.

The invention will be described in further detail with an example of an embodiment and with reference to the attached drawing in which

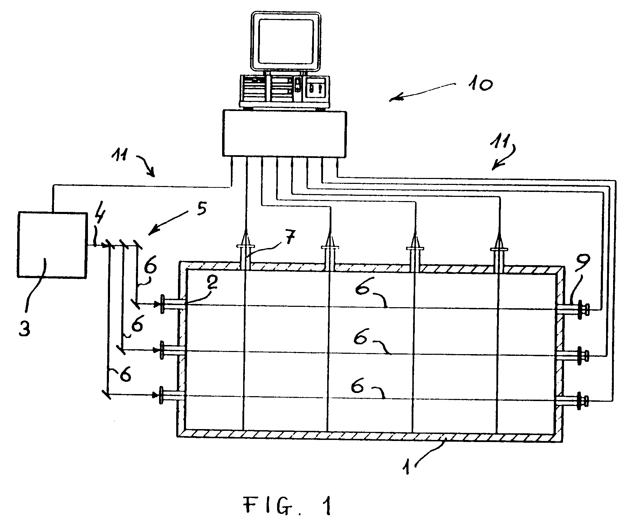

Fig. 1 shows the equipment that enacts the method in a flue for fumes of a burner in a thermo-electric power-plant.

The figure shows a cross section of a flue 1 of a burner that has three apertures 2 closed with material transparent to the laser beam employed on the left wall; the source of a suitable laser beam 3 issues a primary laser beam 4 that a system of mirrors 5 breaks down and reflects into $n = 3$ secondary laser beams 6, all lying on the same plane, that penetrate the flue through apertures 2 parallel to one another; on the upper wall are located $q = 4$ microphones 7 suited to detecting the acoustic signals arriving from the $m = n \times q = 12$ points 8 of the network generated by the intersection of the three laser beams with the four planes perpendicular to the laser beams, and all passing through the centre of a microphone; on the right wall of the flue there are three light detectors 9 each in front of an aperture 2 and struck by laser beam 6 to allow the measurement of the energy transmitted through the flue; an electronic data control and retrieval system 10, linked by suitable cables 11 to the above described parts, gathers and processes the photo-acoustic signals arriving from the microphones and the energy signals arriving from the light detectors and governs the functioning of the entire system.

## Claims

1. Photo-acoustic method for the measurement of the concentration of light absorbing substances in an extended environment **characterized** in that within said environment at least a number of $m$ intersection points (8) between a number $n$ of pulse laser beams (6), at convenient distances, and a number of $q$ planes, each perpendicular to an own corresponding laser beam and passing through the centre of a microphone (7), in order to obtain a number of $m = n \times q$ photo-acoustic signals used in performing the desired measurement.

2. Method according to claim 1 characterized in that the $n$ laser beams (6) are secondary beams obtained by reflecting onto a group of mirrors (5) a primary laser beam emitted by an appropriate pulse laser source (3).

3. Method according to claims 1 and 2 characterized in that the $n$ laser beams (6) are parallel to one another and lie upon the same plane and that said $q$ planes are parallel to one another and perpendicular to the laser beams.

4. Method according to claims 1, 2 and 3 characterized in that said extended environment may be a space (1) limited by a perimeter wall such as a duct in which a fluid runs in which said $n$ laser beams (6) penetrate transversally through apertures (2) made in a first portion of said wall, while said $q$ planes passing through the centre of as many microphones (7) pass transversally in the duct (1) through a second portion of said wall in which said microphones (7) are installed.

5. Method according to claims 1 to 4 characterized in that suitable light detectors (9) are installed beyond said number of intersection points $m$ in order to each receive one of said laser beams (6) and measure the energy transmitted through the environment and, hence, provide data on the average concentration of the substance examined and to allow to calculate the energy of the laser beam in each of said intersection points $m$ and, hence, the punctual concentration.

6. Method according to claims 1 to 5 characterized in that each of said microphones (7) is associated to a receiving antenna in order to provide ampler signals.

7. Method according to the previous claims characterized in that said laser source (3) is preferably a short pulse type to produce short acoustic signals and photo-acoustic signals that, being originated by laser beams (6) set at different distances from the microphones (7), reach the latter at different times and are therefore clearly distinguished allowing to perform contemporary measurements along all the laser beams (6) or, alternately, as a sequence along one laser beam after the other.

FIG. 1